# EUROPEAN PATENT APPLICATION

(11) **EP 4 699 871 A1**
(43) Date of publication of application: **25.02.2026**
(21) Application number: 24791869.1
(22) Date of filing: 08.04.2024
(51) Int. Cl.: B60R 21/231, B60R 21/207, B60R 21/16, B60N 2/62, B60N 2/42

(54) **AIR BAG OF AIRBAG DEVICE, MANUFACTURING METHOD THEREFOR AND AIRBAG DEVICE OF SEAT**

(30) Priority: 21.04.2023 CN 202310437323
(71) Applicant: Yanfeng International Automotive Technology Co., Ltd., Shanghai 201306 (CN)
(72) Inventor: LIU, Chongqing, Shanghai 201315 (CN); NI, Fan, Shanghai 201315 (CN); TIAN, Yuheng, Shanghai 201315 (CN); ZHANG, Chi, Shanghai 201315 (CN)
(74) Representative: Reitstötter Kinzebach
(86) International application number: PCT/CN2024/086492
(87) International publication number: WO 2024/217284

(57) **Abstract**

The present disclosure relates to an air bag for an airbag device, a manufacturing method thereof, and a seat airbag device. The air bag comprises an inflation chamber formed by a sheet having a central axis and a folding line perpendicular to the central axis, the sheet comprising: a first edge and a second edge arranged opposite to each other on two sides of the folding line, a middle portion of the first edge protruding away from the folding line to form a first extension, and a middle portion of the second edge protruding away from the folding line to form a second extension adapted to be connected to the first extension; a third edge and a fourth edge extending from a first end of the folding line to the first edge and the second edge, respectively, in a symmetrical manner with respect to the folding line, and adapted to be connected to each other after the sheet is folded; and a fifth edge and a sixth edge extending from a second end of the folding line opposite to the first end, to the first edge and the second edge, respectively, in a symmetrical manner with respect to the folding line, and adapted to be connected to each other after the sheet is folded.

## Description

### Related field

The present disclosure relates generally to the field of passive safety devices for vehicles, and more particularly to an air bag for an airbag device. In addition, the present disclosure also relates to a method for manufacturing such air bag, and to a seat airbag device comprising such air bag.

### Background

In order to protect an occupant in a seat position to the greatest extent in a collision, a vehicle uses an airbag system comprising an air bag, and a seat belt for restraining the occupant. Currently, in order to improve comfort for the occupant, a "zero-gravity seat" is favored by more and more automobile manufacturers. When a front collision to the vehicle occurs with such zero-gravity seat in a reclined position, the occupant will move forward due to inertia and present a submarining trend, resulting in the spinal injury of the occupant. At this time, existing passive safety devices (comprising but not limited to a safety belt, a PAB (passenger airbag), etc.) cannot effectively reduce the spinal injury. Therefore, in order to meet the trend of the zero-gravity seat market, more and more vehicles have introduced a seat airbag device.

Various types of seat airbag devices currently known in the market are installed between a seat frame and a foam layer as an example but not by way of limitation. An air bag of a known seat airbag device can be laid flat on the seat frame, and when a collision occurs with the occupant in the reclined position, a gas generator transmits gas to the air bag to expand and unfold the air bag, such that the thigh to the hip of the occupant can be lifted, thereby preventing the occupant from submarining caused by sliding forward due to inertia; but the disadvantage is that the known seat airbag device is especially installed on a basin of a seat with an unfolded position being relatively forward, and the thigh is mainly lifted to provide the occupant in the upright sitting posture with anti-submarining protection, and the known airbag device adopts an air bag with a plurality of sheets sewn into a three-dimensional structure, which is complex in process, is high in cost, and is difficult to be folded, and at the same time, it is not enough to provide safety protection for the occupant in the large-angle sitting posture. An air bag of a known seat airbag device can also be folded on the seat frame, and when a collision occurs, a gas generator transmits gas to the air bag to expand and unfold the air bag to achieve the above effect; but the disadvantage is that the air bag in the folded state will be subjected to an external resistance during inflation and expansion process to affect its deployment, thereby affecting the effect of lifting the thigh of the occupant by the airbag device.

### Summary

An object of the present disclosure is to provide an air bag for an airbag device and a manufacturing method thereof, wherein such air bag is simple in structure, is convenient to manufacture, is low in cost, and can provide a better supporting force to a thigh portion and a hip portion of an occupant, and when in an upright sitting posture and a large-angle sitting posture, it can effectively reduce a submarining risk and a spinal injury and prevent the occupant from sliding out of a seat.

To this end, a first aspect of the present disclosure provides an air bag for an airbag device, comprising an inflation chamber formed by a sheet having a central axis along a first direction and a folding line along a second direction perpendicular to the first direction, wherein the sheet is a whole sheet or is formed by connecting two sub-sheets along the folding line, the sheet comprising: a first edge and a second edge arranged opposite to each other on two sides of the folding line, wherein a middle portion of the first edge protrudes away from the folding line to form a first extension, a middle portion of the second edge protrudes away from the folding line to form a second extension, and the second extension is adapted to be connected to the first extension after the sheet is folded; a third edge and a fourth edge extending from a first end of the folding line to the first edge and the second edge, respectively, in a symmetrical manner with respect to the folding line, and adapted to be connected to each other after the sheet is folded; a fifth edge and a sixth edge extending from a second end of the folding line opposite to the first end, to the first edge and the second edge, respectively, in a symmetrical manner with respect to the folding line, and adapted to be connected to each other after the sheet is folded, wherein the inflation chamber is configured to automatically form a three-dimensional bag body with a high front portion and a low rear portion after being inflated and unfolded.

According to an alternative embodiment of the present disclosure, the sheet is provided with an opening adapted to form a notch, and the opening is passed by the folding line and is arranged to be symmetrical with respect to the folding line.

According to an alternative embodiment of the present disclosure, a shape of the opening is selected from a circle, an ellipse, a rectangle, a rhombus, an I-shape, and an irregular polygon.

According to an alternative embodiment of the present disclosure, the fifth edge and the sixth edge are arranged to be symmetrical to the third edge and the fourth edge, respectively, with respect to the central axis.

According to an alternative embodiment of the present disclosure, the third edge and the fourth edge extend from the first end of the folding line to the first edge and the second edge, respectively, away from the central axis, and/or, the fifth edge and the sixth edge extend from the second end of the folding line to the first edge and the second edge, respectively, away from the central axis.

According to an alternative embodiment of the present disclosure, each of the third edge and the fourth edge protrudes away from the central axis adjacent to the folding line to form a protrusion, and/or, each of the fifth edge and the sixth edge protrudes away from the central axis adjacent to the folding line to form a protrusion.

According to an alternative embodiment of the present disclosure, a dimension of the second extension along the first direction is greater than that of the first extension along the first direction.

According to an alternative embodiment of the present disclosure, a dimension of the second extension along the second direction is equal to that of the first extension along the second direction.

According to an alternative embodiment of the present disclosure, the air bag further comprises at least one drawstring connected to the sheet adjacent to the folding line to be adapted to connect the air bag to a seat frame.

A second aspect of the present disclosure provides a method of manufacturing the air bag for an airbag device according to the first aspect of the present disclosure, the method comprising following steps in sequence: a) providing the sheet; b) folding the sheet along the folding line to form a double-layer structure; c) connecting the third edge and the fourth edge to each other and the fifth edge and the sixth edge to each other by sewing to form a bag with an opening; d) pulling an inner side of the bag outward to complete turning the bag; e) connecting the second extension to the first extension by sewing to complete sealing.

According to an alternative embodiment of the present disclosure, the sheet is provided with an opening adapted to form a notch, the opening being passed by the folding line and being arranged to be symmetrical with respect to the folding line, and the step c) further comprises connecting two layers of the double-layer structure to each other by sewing along an edge of the opening.

According to an alternative embodiment of the present disclosure, a dimension of the second extension along the first direction is greater than that of the first extension along the first direction, and the step e) comprises connecting the second extension to the first edge and the second edge by sewing.

According to an alternative embodiment of the present disclosure, a dimension of the second extension along the first direction is equal to that of the first extension along the first direction, and the step e) comprises connecting the first extension to the first edge and connecting the second extension to the second edge by sewing.

According to an alternative embodiment of the present disclosure, after the step e), the method further comprises connecting at least one drawstring to the sheet by sewing adjacent to the folding line.

A third aspect of the present disclosure provides a seat airbag device comprising the air bag for an airbag device according to the first aspect of the present disclosure and adapted to be connected to a seat frame.

According to an alternative embodiment of the present disclosure, the seat frame comprises a cushion front frame and a crossbar located behind the cushion front frame, and the air bag is adapted to be connected to the cushion front frame through an air generator and connected to the crossbar through at least one drawstring.

Compared with the prior art, the air bag for an airbag device according to the present disclosure has a plurality of beneficial technical effects, especially: the air bag for an airbag device according to the present disclosure can be made by folding, sewing, bag turning, sealing, etc. to the sheet, and the reserved edge portion can be used to make the air bag present the required state with a high front portion and a low rear portion after being inflated and unfolded, thus the air bag is simple in structure, is convenient to manufacture, is low in cost, is wide in applicability, and can provide a better supporting force to a hip portion and a thigh portion of an occupant through the shape with a high front portion and a low rear portion after being inflated and unfolded, thereby reducing the vertebral compression force and the risk of submarining, and effectively preventing the vertebral injury of the occupant and the risk of slipping out of the seat.

### Brief Description of Drawings

Other features and advantages of the present disclosure will be better understood from the following detailed description of the preferred embodiments taken in conjunction with the accompanying drawings. In the drawings, the same reference numerals indicate the same or similar components.
FIGS. 1A to 1E are schematic views of a forming process of an air bag according to a first embodiment of the present disclosure;
FIGS. 2A to 2E are schematic views of a forming process of an air bag according to a second embodiment of the present disclosure;
FIGS. 3A to 3C are schematic views of a sewing process of an air bag according to a third embodiment of the present disclosure;
FIG. 4 is a schematic view of an unfolded state of the air bag according to the first embodiment of the present disclosure;
FIG. 5 is a schematic view of an unfolded state of the air bag according to the second embodiment of the present disclosure;
FIG. 6 is a schematic view of an unfolded state of an air bag according to a fourth embodiment of the present disclosure;
FIG. 7 is a schematic view of installation of a rear end of the air bag according to the present disclosure;
FIG. 8 is a schematic view of a working state of the air bag according to the present disclosure.

It should be understood that the drawings are not only used to explain and illustrate the present disclosure, but also to limit the present disclosure when necessary.

### Detailed Description

The implementation and usage of specific embodiments are discussed in detail below. However, it should be understood that the discussed specific embodiments are merely intended to illustrate specific ways of implementing and using the present disclosure, and are not intended to limit the scope of the present disclosure.

In the specification, directional expressions such as "upper", "lower", "front", "rear" and the like are not absolute but are relative when describing the structural positions of various components. For example, when the components are arranged as shown in the figures, these directional expressions are appropriate, but when the positions of the components in the figures are changed, these directional expressions should be changed accordingly. In addition, in the specification, "front" and "rear" are defined with reference to the driving direction of the vehicle. In addition, in the specification and the drawings, the "X" direction represents the length direction of the sheet 100, and the "Y" direction represents the width direction of the sheet 100.

The present disclosure relates to an air bag of a seat airbag device of a vehicle, wherein the air bag comprises a chamber formed by a sheet 100 being a cloth sheet formed by cutting or the like, and having a central axis A along its length direction X and a middle folding line 101 along its width direction Y.

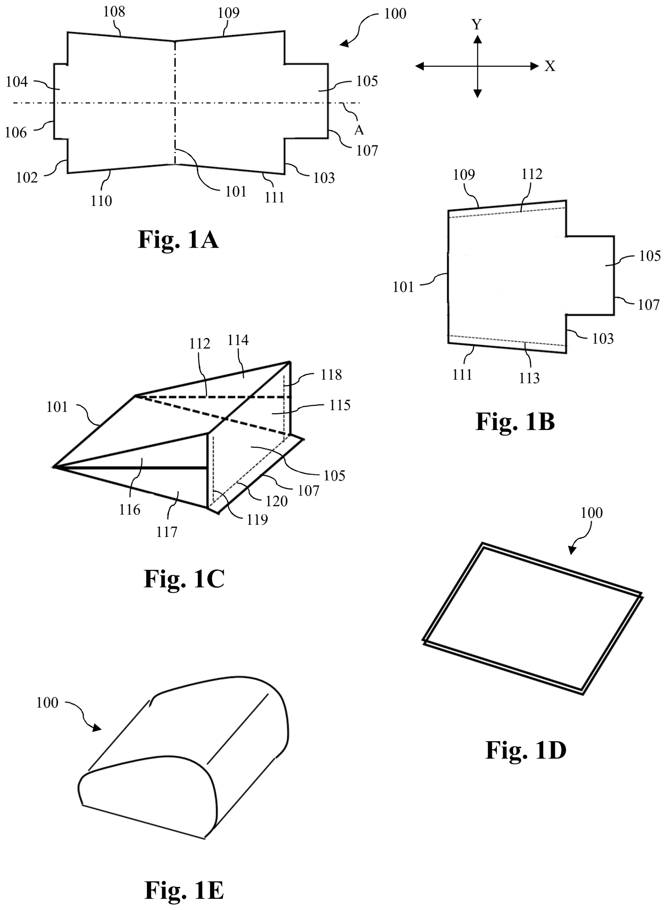

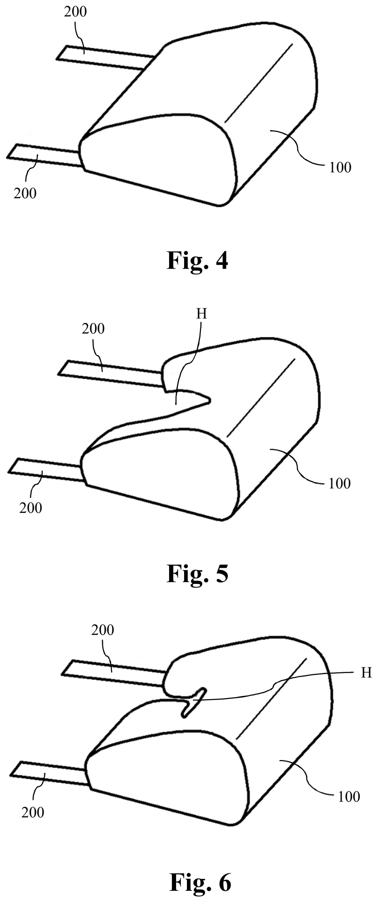

FIGS. 1A to 1E are schematic views of a forming process of an air bag according to a first embodiment of the present disclosure, and FIG. 4 is a schematic view of an unfolded state of the air bag according to the first embodiment.

As shown, according to this first embodiment, the sheet 100 is a whole unitary sheet and comprises a first edge 102, a second edge 103, a third edge 108, a fourth edge 109, a fifth edge 110, and a sixth edge 111. The first edge 102 and the second edge 103 are arranged opposite to each other on two sides of the folding line 101, wherein a middle portion of the first edge 102 protrudes away from the folding line 101 to form a first extension 104, a middle portion of the second edge 103 protrudes away from the folding line 101 to form a second extension 105, and the second extension 105 can be connected to the first extension 104 after the sheet 100 is folded along the folding line 101. In the first embodiment, the dimension of the second extension 105 along the length direction X is greater than that of the first extension 104 along the length direction X, and the dimension of the second extension 105 along the width direction Y is substantially equal to that of the first extension 104 along the width direction Y.

The third edge 108 and the fourth edge 109 extend from the first end of the folding line 101 to the first edge 102 and the second edge 103, respectively, in a symmetrical manner with respect to the folding line 101, and can be connected to each other after the sheet 100 is folded along the folding line 101. The fifth edge 110 and the sixth edge 111 extend from the second end of the folding line 101 opposite to the first end, to the first edge 102 and the second edge 103, respectively, in a symmetrical manner with respect to the folding line 101, and can be connected to each other after the sheet 100 is folded along the folding line 101.

In the first embodiment, the fifth edge 110 and the sixth edge 111 are arranged to be symmetrical to the third edge 108 and the fourth edge 109, respectively, with respect to the central axis A. More specifically, the third edge 108 and the fourth edge 109 extend obliquely from the first end of the folding line 101 to the first edge 102 and the second edge 103, respectively, in a substantially straight line away from the central axis A, and the fifth edge 110 and the sixth edge 111 also extend obliquely from the second end of the folding line 101 to the first edge 102 and the second edge 103, respectively, in a substantially straight line away from the central axis A. Of course, the above configuration is not limitative, and the sheet 100 may also be designed to have an asymmetric configuration with respect to the central axis A. For example, the sheet 100 may be designed to have the above-described configuration of oblique straight edge on only one side of the central axis A.

In addition, the air bag further comprises at least one drawstring 200, for example, two drawstrings 200 arranged symmetrically with respect to the central axis A as shown, and these drawstrings 200 are connected to the sheet 100 adjacent to the folding line 101 to connect the air bag to a seat frame.

The manufacturing process of the air bag is briefly described below. First, the sheet 100 is provided (FIG. 1A), and the sheet 100 is folded along folding line 101 to form a double-layer structure. Then, a bag with an opening is formed by sewing along a first sewing line 112 to connect the third edge 108 and the fourth edge 109 to each other, and by sewing along a second sewing line 113 to connect the fifth edge 110 and the sixth edge 111 to each other (FIG. 1B). Then, the inner side of the bag is pulled outward to complete turning the bag, such that the first sewing line 112 and the second sewing line 113 are turned to be hidden inside the air bag, and the sealing is completed by sewing along the edge of the second extension 105. More specifically, the second extension 105 is folded towards the first extension 104, and two side edges of the second extension 105 are connected to the first edge 102 and the second edge 103 by sewing along a third sewing line 118 and a fourth sewing line 119, and finally a bottom edge 107 of the second extension 105 is connected to a bottom edge 106 of the first extension 104 by sewing along a fifth sewing line 120 (FIG. 1C). Finally, two drawstrings 200 may be connected to the sheet 100 from the bottom of the air bag by sewing adjacent to the folding line 101.

After the sewing is complete, the air bag may be folded into an uninflated double-layer structure (FIG. 1D). When inflated and unfolded in the event of a collision, the air bag can automatically form a three-dimensional bag body with a high front portion and a low rear portion (FIGS. 1E and 4), wherein the position sealed by the second extension 105 is the front side of the air bag, the position of the folding line 101 is the rear side of the air bag, the substantially triangular edge portion 114 along the third edge 108 and the substantially triangular edge portion 115 along the fourth edge 109 of the sheet 100 are connected to each other to form one side surface of the air bag, and the substantially triangular edge portion 116 along the fifth edge 110 and the substantially triangular edge portion 117 along the sixth edge 111 of the sheet 100 are connected to each other to form the other side surface of the air bag.

It is understood that the form of the sheet 100 is not limited to a whole unitary sheet. According to a variant, the sheet 100 may be formed by connecting two sub-sheets by sewing along the folding line 101 to form an upper-lower double-layer structure, that is, the portion on the left side of the folding line 101 in FIG. 1A is the first sub-sheet, and the portion on the right side of the folding line 101 is the second sub-sheet, and the overall structure and effect of the air bag formed thereby are the same as those of the first embodiment described above.

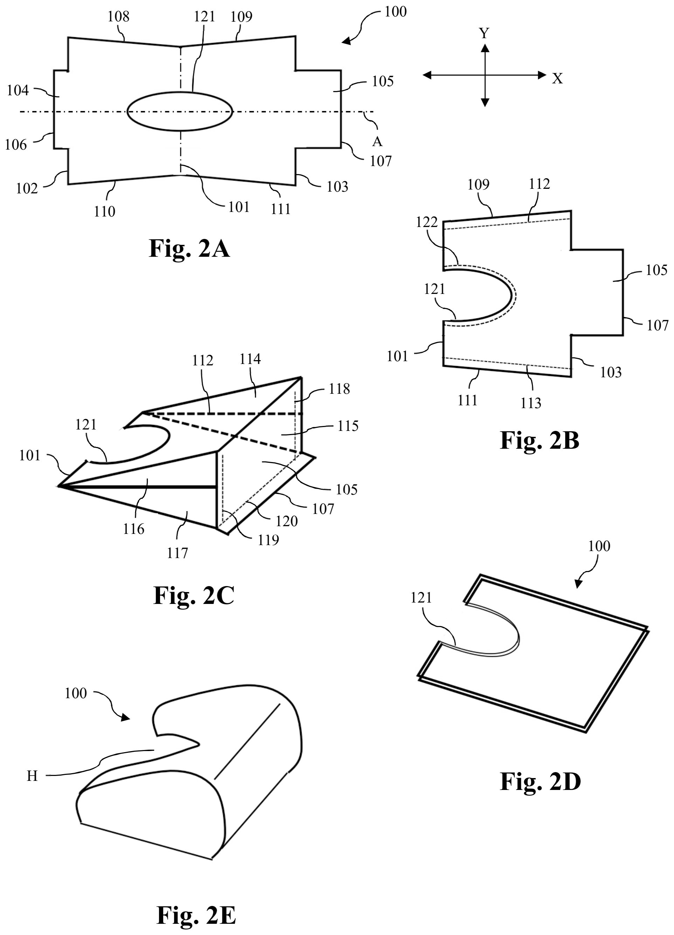

FIG. 2A to FIG. 2E are schematic views of a forming process of an air bag according to a second embodiment of the present disclosure, and FIG. 5 is a schematic view of an unfolded state of the air bag according to the second embodiment.

As shown in the figure, the overall structure of the air bag according to the second embodiment is similar to that of the first embodiment, so the similarities will not be repeated. The difference lies in that, in order to adapt the rear half of the air bag to the installation environment of a vehicle seat, for example, without affecting the arrangement of other devices (such as ventilation devices) that help to improve the comfort level of the seat below the air bag, the sheet 100 is provided with an opening 121 passed by the folding line 101 and arranged to be symmetrical with respect to the folding line 101, such that after the air bag is formed, a notch H can be formed for environmental components, such as ventilation devices, to pass through.

The design of the notch H is well adapted to the installation environment of the seat, and the front half of the air bag opposite to the notch H for lifting the thigh of the occupant can provide a better supporting force to the thigh portion, thereby reducing the vertebral compression force and the risk of submarining, and effectively preventing the occupant from sliding out. Therefore, the air bag can achieve the desired function of preventing the occupant from submarining without affecting other devices for improving the comfort of the seat.

In this second embodiment, the opening 121 has a substantially ellipse shape to form a substantially U-shaped notch H. It can be understood that in the sewing step before turning the bag, the upper and lower layers of the double-layer structure are connected to each other at the position of the opening 121 by sewing along a sixth sewing line 122 at the edge of the opening 121, thereby closing the bottom of the bag.

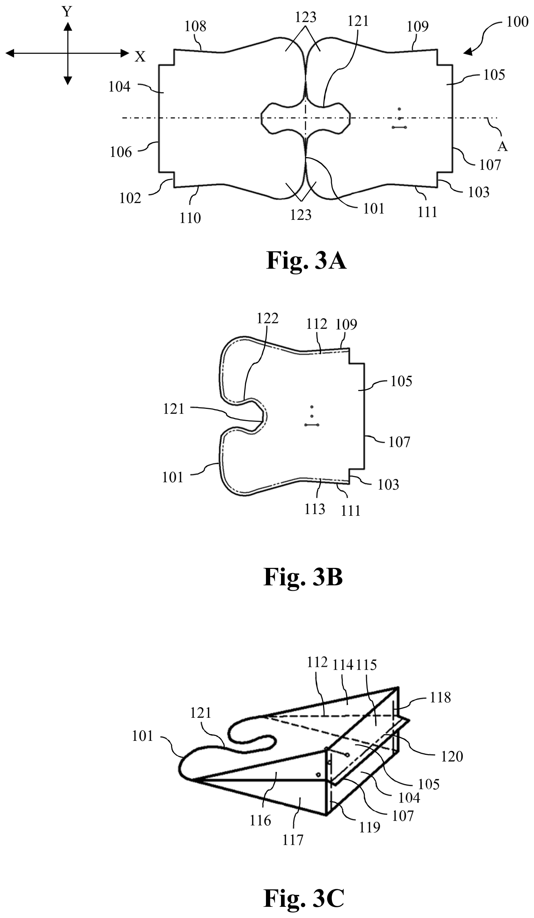

FIGS. 3A to 3C are schematic views of a sewing process of an air bag according to a third embodiment of the present disclosure.

As shown, in contrast to the above two embodiments, in this third embodiment, each of the third edge 108 and the fourth edge 109 protrudes away from the central axis A adjacent to the folding line 101 to form a protrusion 123, and in a symmetrical manner to the third edge 108 and the fourth edge 109, each of the fifth edge 110 and the sixth edge 111 also protrudes away from the central axis A adjacent to the folding line 101 to form a protrusion 123. These protrusions 123 are used to increase the inflation volume of the rear end of the air bag and ensure that the rear end of the air bag has a certain thickness. Of course, the above configuration is not limitative, and the sheet 100 may also be designed to have the above-mentioned protrusion 123 on only one side of the central axis A.

In addition, in the third embodiment, the dimension of the second extension 105 along the length direction X is substantially equal to that of the first extension 104 along the length direction X. In the sewing step during sealing, the first extension 104 and the second extension 105 are folded towards each other, the two side edges of the first extension 104 are connected to the first edge 102 and the two side edges of the second extension 105 are connected to the second edge 103 by sewing along the third sewing line 118 and the fourth sewing line 119, and finally the bottom edge 107 of the second extension 105 is connected to the bottom edge 106 of the first extension 104 by sewing along the fifth sewing line 120 (FIG. 3C).

FIG. 6 is a schematic view of an air bag in an unfolded state according to a fourth embodiment of the present disclosure.

As shown, in contrast to the second embodiment, the opening 121 of the sheet 100 has a substantially I-shape to form a substantially T-shaped notch H. It can be understood that the shape of the opening 121 as shown is not limitative, and may be determined according to the installation environment of the vehicle seat. For example, the shape of the opening 121 may also include, but is not limited to, a plurality of shapes such as a circle, a rectangle, a rhombus, an irregular polygon, and the like, as long as the opening 121 is passed by the folding line 101 and is symmetrical with respect to the folding line 101.

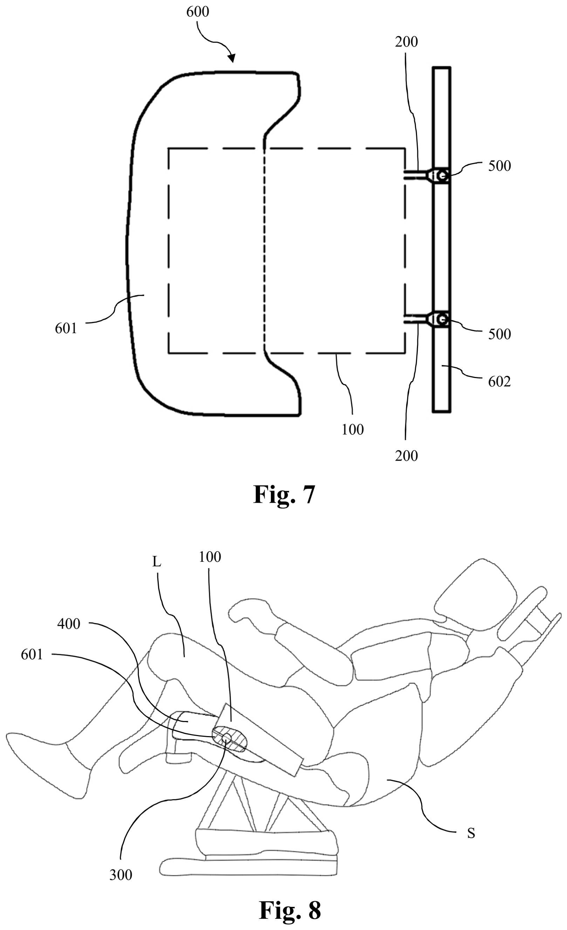

FIG. 7 is a schematic view of installation of the rear end of the air bag according to the present disclosure, and FIG. 8 is a schematic view of the working state of the air bag according to the present disclosure.

As shown, the seat frame of the vehicle comprises a cushion frame 600 (i.e., a basin of the seat), and the cushion frame 600 comprises a cushion front frame 601 and a crossbar 602 located behind the cushion front frame 601 to form a half-basin configuration. The above air bag may be laid flat on the cushion frame 600, the gas generator 300 arranged at the front portion of the air bag is connected to the cushion front frame 601 by a bolt to provide a first fixing point for the air bag, and the free end (the rear end) of the drawstring 200 is connected to the crossbar 602 by a connecting portion 500, such as a hook or a webbing joint, to provide a second fixing point for the air bag, such that the air bag can be prevented from sliding before and after explosion, thereby increasing the stability of the product.

The air bag may be arranged between the cushion foam layer 400 and the cushion frame 600 of the vehicle seat, or may be arranged in the cushion foam layer 400. In an uninflated state, the air bag may cover the entire seat basin after being folded, and extend to the rear position of the seat basin. Referring to FIG. 8, when the seat S is in the reclined posture, if a collision to the vehicle occurs, the gas generator 300 will be ignited to supply gas to the air bag, such that the air bag is expanded and unfolded upward, and the air bag automatically forms one three-dimensional bag body with a slope (i.e., a high front portion and a low rear portion) sewn from a unitary sheet or two sub-sheets after being inflated and unfolded, so as to lift the thigh portion L and the hip portion of the occupant, thereby preventing the occupant from submarining, and counteracting and mitigating the vertebral pressure to the upper torso.

It is noted that the present disclosure (e.g., the invention concept, etc.) has been described in the specification of this patent document and/or illustrated in the drawings according to exemplary embodiments; the embodiments of the present disclosure are presented only by way of example and are not intended to limit the scope of the disclosure. The structure and/or arrangement of elements of the invention concept embodied in the present disclosure as described in the specification and/or illustrated in the drawings is illustrative only. Though exemplary embodiments of the present disclosure have been described in detail in this patent document, it will be readily understood by those of ordinary skill in the art that equivalents, modifications, variations, and the like, to the subject matter of the exemplary embodiments and the alternative embodiments are possible and are to be considered within the scope of the present disclosure; all of such subject matters (e.g., modifications, variations, embodiments, combinations, equivalents, and the like) are intended to be included within the scope of the present disclosure. It should also be noted that various other modifications, changes, substitutions, equivalents, variations, omissions, and the like, may be made in the configurations and/or arrangements of the exemplary embodiments (e.g., in matters of concept, design, structure, device, form, assembly, construction, means, function, system, process/method, steps, order of process/method steps, operation, operating condition, performance, material, composition, combination, and the like) without departing from the scope of the present disclosure; all of such subject matters (e.g., modifications, variations, embodiments, combinations, equivalents, and the like) are intended to be included within the scope of the present disclosure. The scope of the disclosure is not intended to be limited to the subject matter described in the specification and/or drawings of this patent document (e.g., details, structures, functions, materials, acts, steps, sequences, systems, results, etc.). In view of the fact that the claims of this patent document are to be properly interpreted to cover the full scope of inventive subject matter (e.g., including any and all of such modifications, variations, embodiments, combinations, equivalents, and the like), it should be understood that the terminology used in this patent document is to provide description of the subject matter of the exemplary embodiments and not limitation to the scope of the disclosure.

It should also be noted that, according to the exemplary embodiments, the present disclosure may include conventional technologies (for example, technologies implemented and/or integrated in the exemplary embodiments, modifications, variations, combinations, equivalents), or may include any other applicable technologies (at current and/or in the future) with the ability to perform the functions and processes/operations described in the specification and/or illustrated in the drawings. All such techniques (e.g., techniques implemented as embodiments, modifications, variations, combinations, equivalents, and the like) are considered to be within the scope of the disclosure of this patent document.

## Claims

1. An air bag for an airbag device, comprising an inflation chamber formed by a sheet (100) having a central axis (A) along a first direction and a folding line (101) along a second direction perpendicular to the first direction, wherein the sheet (100) is a whole sheet or is formed by connecting two sub-sheets along the folding line (101),
the sheet (100) comprising:
a first edge (102) and a second edge (103) arranged opposite to each other on two sides of the folding line (101), wherein a middle portion of the first edge (102) protrudes away from the folding line (101) to form a first extension (104), a middle portion of the second edge (103) protrudes away from the folding line (101) to form a second extension (105), and the second extension (105) is adapted to be connected to the first extension (104) after the sheet (100) is folded;
a third edge (108) and a fourth edge (109) extending from a first end of the folding line (101) to the first edge (102) and the second edge (103), respectively, in a symmetrical manner with respect to the folding line (101), and adapted to be connected to each other after the sheet (100) is folded; and
a fifth edge (110) and a sixth edge (111) extending from a second end of the folding line (101) opposite to the first end, to the first edge (102) and the second edge (103), respectively, in a symmetrical manner with respect to the folding line (101), and adapted to be connected to each other after the sheet (100) is folded,
wherein the inflation chamber is configured to automatically form a three-dimensional bag body with a high front portion and a low rear portion after being inflated and unfolded.

2. The air bag for an airbag device according to claim 1, wherein the sheet (100) is provided with an opening (121) adapted to form a notch (H), and wherein the opening (121) is passed by the folding line (101) and is arranged to be symmetrical with respect to the folding line (101).

3. The air bag for an airbag device according to claim 2, wherein a shape of the opening (121) is selected from a circle, an ellipse, a rectangle, a rhombus, an I-shape, and an irregular polygon.

4. The air bag for an airbag device according to any one of claims 1-3, wherein the fifth edge (110) and the sixth edge (111) are arranged to be symmetrical to the third edge (108) and the fourth edge (109), respectively, with respect to the central axis (A).

5. The air bag for an airbag device according to any one of claims 1-3, wherein the third edge (108) and the fourth edge (109) extend from the first end of the folding line (101) to the first edge (102) and the second edge (103), respectively, away from the central axis (A), and/or, the fifth edge (110) and the sixth edge (111) extend from the second end of the folding line (101) to the first edge (102) and the second edge (103), respectively, away from the central axis (A).

6. The air bag for an airbag device according to any one of claims 1-3, wherein each of the third edge (108) and the fourth edge (109) protrudes away from the central axis (A) adjacent to the folding line (101) to form a protrusion (123), and/or, each of the fifth edge (110) and the sixth edge (111) protrudes away from the central axis (A) adjacent to the folding line (101) to form a protrusion (123).

7. The air bag for an airbag device according to any one of claims 1-3, wherein a dimension of the second extension (105) along the first direction is greater than that of the first extension (104) along the first direction.

8. The air bag for an airbag device according to any one of claims 1-3, wherein a dimension of the second extension (105) along the second direction is equal to that of the first extension (104) along the second direction.

9. The air bag for an airbag device according to any one of claims 1-3, wherein the air bag further comprises at least one drawstring (200) connected to the sheet (100) adjacent to the folding line (101) to be adapted to connect the air bag to a seat frame.

10. A method of manufacturing the air bag for an airbag device according to any one of claims 1-9, comprising following steps in sequence:
a) providing the sheet (100);
b) folding the sheet (100) along the folding line (101) to form a double-layer structure;
c) connecting the third edge (108) and the fourth edge (109) to each other and the fifth edge (110) and the sixth edge (111) to each other by sewing to form a bag with an opening;
d) pulling an inner side of the bag outward to complete turning the bag;
e) connecting the second extension (105) to the first extension (104) by sewing to complete sealing.

11. The method of manufacturing the air bag for an airbag device according to claim 10, wherein the sheet (100) is provided with an opening (121) adapted to form a notch (H), the opening (121) being passed by the folding line (101) and being arranged to be symmetrical with respect to the folding line (101), and wherein the step c) further comprises connecting two layers of the double-layer structure to each other by sewing along an edge of the opening (121).

12. The method of manufacturing the air bag for an airbag device according to claim 9 or 10, wherein a dimension of the second extension (105) along the first direction is greater than that of the first extension (104) along the first direction, and the step e) comprises connecting the second extension (105) to the first edge (102) and the second edge (103) by sewing.

13. The method of manufacturing the air bag for an airbag device according to claim 9 or 10, wherein a dimension of the second extension (105) along the first direction is equal to that of the first extension (104) along the first direction, and the step e) comprises connecting the first extension (104) to the first edge (102) and connecting the second extension (105) to the second edge (103) by sewing.

14. The method of manufacturing the air bag for an airbag device according to claim 9 or 10, wherein after the step e), the method further comprises connecting at least one drawstring (200) to the sheet (100) by sewing adjacent to the folding line (101).

15. A seat airbag device, comprising the air bag for an airbag device according to any one of claims 1-9 and adapted to be connected to a seat frame.

16. The seat airbag device according to claim 15, wherein the seat frame comprises a cushion front frame (601) and a crossbar (602) located behind the cushion front frame (601), and wherein the air bag is adapted to be connected to the cushion front frame (601) through an air generator (300) and connected to the crossbar (602) through at least one drawstring (200).
